# EUROPEAN PATENT APPLICATION

(11) **EP 4 545 357 A1**
(43) Date of publication of application: **30.04.2025**
(21) Application number: 24383162.5
(22) Date of filing: 22.10.2024
(51) Int. Cl.: B60Q 1/26

(54) **POSITIONING BEACON WITH ONE-PIECE BASE**

(30) Priority: 23.10.2023 ES 202331875 U
(71) Applicant: Atressa Global Corporation, S.L., 48300 Gernika (ES)
(72) Inventor: BASTERRECHEA SÁNCHEZ, Cesar, GERNIKA (ES)
(74) Representative: Isern Patentes y Marcas S.L.

(57) **Abstract**

The present invention relates to a positioning beacon having a one-piece base, comprising a base (2), and a reflector, which in turn includes one or more reflective elements (2), and a reflector holder (3), attached to an upper portion of the base (1), and on which the reflective elements (2) are attached, the beacon comprising the base (1) and the reflector holder (3), which together form a single one-piece body in the form of a base-holder block.

## Description

### Technical field and object of the invention

The present invention falls generally within the field of positioning beacon technology. Additionally, the invention can also be related to vehicle traffic, more specifically, to the required signalling of vehicle traffic accidents. More specifically, the object of the invention relates to a positioning beacon having a configuration, by means of a one-piece base, which allows faster manufacturing, and which can be used as a V16 light signal to identify crashed motor vehicles on the road.

### Background

In reference to the specific case of V16 type beacons, which are used for signalling motor vehicle accidents on the road, these are beacons which, by legal requirement, emit an intense, 360° yellow light signal intermittently and continuously for at least thirty minutes, as well as they are equipped with connectivity, being powered by batteries. These beacons should be kept in the glove compartment of vehicles so that in the event of a breakdown or accident, their operation can be activated, preferably placing the beacon on the roof of the vehicle. When activated, in addition to emitting the warning light signal, the beacon connects to a tracking platform, managed by the *Dirección General de Tráfico* (Spanish Directorate-General for Traffic, DGT), called DGT 3.0 platform, for transmitting its location in real time and warn other road users of its position.

Said beacons usually comprise a base, lowerly hollow, which serves as a reference for mounting the remaining elements, including a reflector, made by one or more reflective elements intended to reflect light 360°. The reflective elements are attached to a reflector holder, which is a body in turn attached to the base.

### Description of the invention

The present invention discloses a positioning beacon having a one-piece base, according to the main claim. The dependent claims describe optional, advantageous embodiments of the beacon of the main claim.

In particular, the present invention relates to a beacon comprising a base, as well as a reflector, the reflector including one or more reflective elements, as well as a reflector holder, attached to an upper portion of the base, and on which the reflective elements are attached. The beacon of the invention is characterised in that the base and the reflector holder together form a single one-piece body, preferably manufactured by moulding.

The one-piece manufacture of the base, in the form of a base-reflector block, provides the following advantages from a manufacturing point of view:
- Reduced number of parts.
- Reduced connection between parts.
- Reduced design of connecting elements and associated tolerances

According to a preferred exemplary embodiment, the beacon of the invention is a road signalling beacon for indicating the position of a broken-down vehicle and, where appropriate, equipped with satellite connectivity for communicating position, even in real time.

### Brief description of the figures

The foregoing and other advantages and features will be more fully understood from the following detailed description of exemplary embodiments with reference to the accompanying drawings, which should be considered by way of illustration and not limitation, wherein:
Figure 1 shows an exploded perspective view of the light beacon object of the invention.
Figure 2 shows, from top to bottom, lower plan, elevation and upper plan views, respectively, of the one-piece assembly shown in Figure 1, including the base and reflector holder.

### List of references:

- 1: Base
- 2: Reflective elements
- 3: Reflector holder
- 4: Receiving surfaces
- 5: Plate
- 6: Holes
- 7: Protuberances
- 8: Cover
- 9: Slots
- 10: Housings
- 11: Battery
- 12: Screen
- 13: Switch
- 14: Upper side of the screen

### Detailed description of an exemplary embodiment

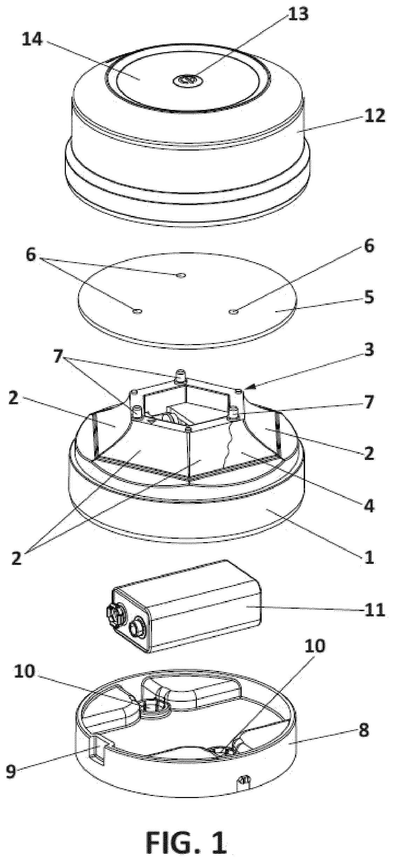

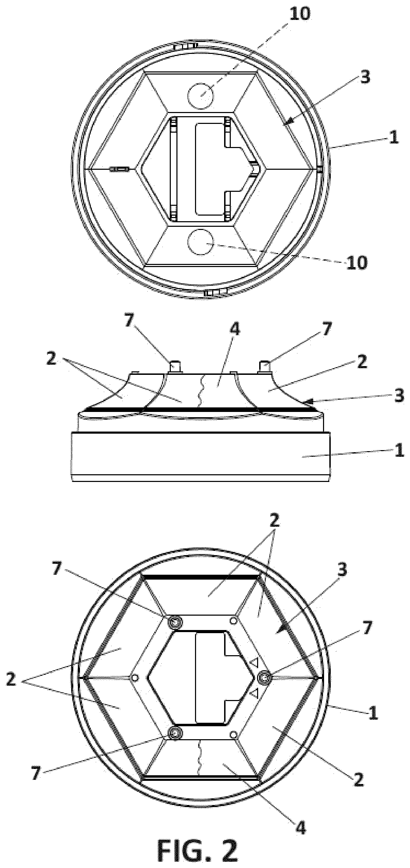

Next, a detailed description of a preferred exemplary embodiment of a positioning beacon having a one-piece base object of the present invention is provided, with the help of the aforementioned figures 1-2. The present exemplary embodiment discloses a beacon of the type forming a V16 type light signal used to signal the presence of a crashed or broken-down vehicle on the road.

According to Figure 1, the beacon of the invention has a hollow base (1) equipped with a lower opening. The base (1) may be cylindrical in shape, preferably circular, but other shapes are also possible: polyhedral, truncated cone, truncated pyramid, etc.

Figure 1 shows that the beacon also comprises a reflector, arranged in an upper portion of the base (1). The reflector includes one or more reflective element(s) (2) positioned around the perimeter to reflect light 360°. The figures show a plurality of reflective elements (2) in a symmetrical configuration, more preferably with axial symmetry, such as, for example, in a regular hexagonal configuration. The reflector further includes a reflector holder (3) attached to the base (1) and on which the reflective elements (2) are attached. By way of example, said reflective elements (2) may be electroplated on corresponding receiving surfaces (4) included in the reflector holder (3), although other possibilities are also possible, such as the reflective elements (2) constituting one or more mirror surfaces obtained on the reflector holder (3), or forming either rigid or flexible laminar elements attached on the reflector holder (3). Also by way of example, the reflective elements (2) can have a wide variety of configurations. On the one hand, in an independent manner they can be one-piece, or they can be divided into sectors. On the other hand, they can be polygonal in shape, e.g. hexagonal, as indicated above, or they can also be revolving bodies, such as toroidal, etc. They may also be flat or curved, in the latter case generally concave. The figures show that the reflective elements (2) are in sectors, with a concave curved surface obtained by electroplating, and arranged in a regular hexagonal configuration.

Advantageously, the base (1) and the reflector holder (3) are formed together in a single one-piece part, preferably manufactured by moulding, forming a base-holder block.

The beacon also includes lighting means attached to the base-holder block and including lighting elements (not shown), such as LEDs, to emit incident light on the reflective elements (2). As is known, the lighting elements may be attached, directly or indirectly, on an upper surface of the base (1) in order to light up the reflective elements (2) from below. However, in the embodiment of the figures, the lighting means include a plate (5) attached to an upper portion of the reflector holder (3), wherein said plate (5) supports the lighting elements so that they light up the reflective elements (2) from above. As an illustrative example, the plate (5) is attached to the reflector holder (3) by means of a combination of holes (6) and protuberances (7) arranged in a corresponding manner on a lower side of the plate (5) and on the upper portion of the reflector holder (3). The figures specifically show that the holes (6) are located on the lower side of the plate (5), in this case being through holes, while the protuberances (7) protrude from the upper portion of the reflector holder (3). The opposite arrangement, i.e. holes (6) in the upper portion of the reflector holder (3) and protuberances (7) protruding from the lower side of the plate (5), is also possible, although less preferred.

The beacon further includes a cover (8) which can be reversibly connected to the base (1), i.e. by means of a releasable connection that allows the base (1) and the cover (8) to be connected and separated an indefinite number of times without the need to destroy the base (1) or the cover (8). Preferably, it is a form-locking releasable connection which, in the example depicted in the figures, comprises a combination of slots (9) and corresponding projections (not shown), both the slots (9) and the projections being L-shaped and made on an outer surface of the base (1) and on an inner surface of the cover (8), to activate the releasable connection by inserting the cover (8) into the opening of the base (1) and turning the base (1) and the cover (8) relative to each other. The cover (8) internally includes housings (10) for magnets (not shown), such as neodymium magnets, which allow attaching the beacon to a desired surface, such as, for example, the surface of the crashed vehicle.

The beacon also includes a battery (11), either rechargeable or non-rechargeable, which is connected to the lighting elements to power said lighting elements. The battery (11) is housed in the opening of the base (1), between the base (1) and the cover (8).

A translucent or transparent screen (12) attached to the base-holder block is also included as a component of the beacon to protect the lighting elements, as well as other elements, such as electronic components, circuitry, etc.

In accordance with regulatory requirements, the beacon may further include connectivity (not shown), i.e. wireless communication means to communicate via satellite, indicating location in real time, with a tracking platform, such as DGT 3.0, or other equivalent platforms, telematically informing other road users of the presence of a broken-down vehicle on the road. The communication means are also powered by the battery (11).

The beacon further includes a switch (13) for operating the beacon, i.e., for selectively activating and deactivating the power supply to the lighting elements and, if applicable, the communication means. According to the example depicted in the figures, the switch (13) is located in a central position on an upper side (14) of the screen (12). According to another more preferred example, said upper side (14) of the screen (12) is deformable, so that, by means of pressure from the user on said upper side (14) of the screen (12), the switch (13) is moved together with the upper side (14) of the screen (12).

## Claims

1. A positioning beacon having a one-piece base, comprising:
- a base (1), and
- a reflector, which in turn includes:
- one or more reflective elements (2); and
- a reflector holder (3), attached to an upper portion of the base (1), and on which the reflective elements (2) are attached;
the beacon being **characterised in that** the base (1) and the reflector holder (3) together form a single one-piece body in the form of a base-holder block.

2. The positioning beacon having a one-piece base according to claim 1, wherein the base-holder block is a moulded product.

3. The positioning beacon having a one-piece base according to any of claims 1-2, additionally comprising lighting means, attached to the base-holder block, and including lighting elements to emit incident light on the reflective element(s) (2).

4. The positioning beacon having a one-piece base according to claim 3, wherein the lighting elements are attached on an upper surface of the base (1) in order to light up the reflective element(s) (2) from below.

5. The positioning beacon having a one-piece base according to claim 3, wherein the lighting elements include a plate (5) attached to an upper portion of the reflector holder (3), wherein said plate (5) supports the lighting elements so that they light up the reflective element(s) (2) from above.

6. The positioning beacon having a one-piece base according to claim 5, wherein the plate (5) is attached to the reflector holder (3) by means of a combination of holes (6) and protuberances (7) arranged in a corresponding manner on a lower side of the plate (5) and on the upper portion of the reflector holder (3).

7. The positioning beacon with a solid base according to any one of claims 2-6, wherein the reflective element(s) (2) are electroplated on corresponding receiving surfaces (4) forming part of the reflector holder (3).

8. The positioning beacon having a one-piece base according to any of claims 1-7, additionally including a cover (8) which can be reversibly connected to the base (1) by means of a releasable connection.

9. The positioning beacon having a one-piece base according to claim 8, wherein the releasable connection is a form-locking releasable connection.

10. The positioning beacon having a one-piece base according to any of claims 1-9, wherein the base (1) has a circular cylindrical shape.

11. The positioning beacon having a one-piece base according to any of claims 1-10, wherein the cover (8) internally includes housings (10) for holding magnets to attach the beacon to a desired surface.

12. The positioning beacon having a one-piece base according to any of claims 3-11, further including a switch (13) for selectively activating and deactivating the power supply of the lighting elements.

13. The positioning beacon having a one-piece base according to claim 12, wherein the switch (13) is located in a central position on an upper side (14) of the screen (12).

14. The positioning beacon having a one-piece base according to claim 13, wherein the upper side (14) of the screen (12) is deformable, so that, by means of pressure from the user, the switch (13) can be moved together with the upper side (14) of the screen (12).

15. The positioning beacon having a one-piece base according to any of claims 1-14, where the beacon constitutes a V16 type light signal for signalling the presence of a crashed or damaged vehicle on the road.
